# EUROPEAN PATENT APPLICATION

(11) **EP 4 477 335 A1**
(43) Date of publication of application: **18.12.2024**
(21) Application number: 22925852.0
(22) Date of filing: 09.02.2022
(51) Int. Cl.: B22F 1/00, B22F 10/28, B22F 10/34

(54) **COPPER ALLOY POWDER**

(71) Applicant: Mitsubishi Materials Corporation, Tokyo 100-8117 (JP)
(72) Inventor: ITO Yuki, Saitama-shi, Saitama 330-8508 (JP); KATO Jun, Saitama-shi, Saitama 330-8508 (JP); NAGATOMO Yoshiyuki, Saitama-shi, Saitama 330-8508 (JP)
(74) Representative: Hoffmann Eitle
(86) International application number: PCT/JP2022/005129
(87) International publication number: WO 2023/152831

(57) **Abstract**

This copper alloy powder includes a copper alloy that contains 5% by mass or more and 50% by mass or less of Ni. This copper alloy powder may contain 45% by mass or more and 95% by mass or less of Cu. This copper alloy powder may contain 1% by mass or more and 42% by mass or less of Zn. This copper alloy powder may contain 7% by mass or less of Mn.

## Description

### [Technical Field]

The present invention relates to a copper alloy powder.

### [Background Art]

In recent years, while the antimicrobial action of copper and a copper alloy has been attracting attention, copper and a copper alloy, which have an antimicrobial action, are expected to be applied to metal additive manufacturing (AM) in order to facilitate the shaping of products having various three-dimensional shapes or the coating of existing components. Among the metal AM, a selective laser melting (SLM) method using a laser is widely used.

It is known a technique for producing an additive manufactured part by the metal AM by using, for example, a copper alloy powder containing either one of chromium or silicon, as disclosed in Patent Document 1 below, or a copper alloy powder containing Cr and Zr, as disclosed in Patent Document 2.

However, the additive manufactured part according to the technique described in Patent Document 1 or Patent Document 2 does not contain elements that are capable of preventing the oxidation of copper. Therefore, in a case where it is used, for example, as a doorknob that requires an antimicrobial action, there is a problem in that the doorknob is easily discolored due to an oxidation reaction during the additive manufacturing, a reaction with atmospheric air, or a contact with the sebum or moisture of a user.

Further, in a case where oxidation easily occurs, there is a concern that the discoloration (the formation of an oxide coating film) of the powder itself may occur due to a reaction with atmospheric air or the like. In such a case, there has been a problem in that in a case where laser powder bed fusion is carried out, the laser absorbability varies between powders depending on the presence or absence of an oxide film, and the form or thickness of an oxide film, and the fusion behavior is not stable; and thereby, it becomes impossible to obtain a part having a stable quality. In addition, in the powder bed fusion bonding method (PBF), in a case where a copper powder has low oxidation resistance, there is a problem in that an unfused copper powder also reacts with atmospheric air and then is oxidized due to heat transfer from a fused portion, and this causes a decrease in the recyclability of the unfused powder.

Therefore, it is required that the oxidation resistance is excellent, that is, the state of the surface oxidation product film is stable, from the viewpoint that the fusion behavior due to the laser at the time of carrying out the laser powder bed fusion can be stabilized, and from the viewpoint that the recyclability of the powder is improved.

### [Citation List]

### [Patent Documents]

[Patent Document 1]
   Japanese Unexamined Patent Application, First Publication No. 2016-211062
[Patent Document 2]
   Japanese Unexamined Patent Application, First Publication No. 2019-70169

### [Summary of Invention]

### [Technical Problem]

The present invention has been invented in consideration of the above-described problems, and one objective of the present invention is to provide a copper alloy powder having excellent oxidation resistance. In addition, another objective of the present invention is to provide a copper alloy powder that has excellent oxidation resistance and also makes it possible to manufacture an additive manufactured part suitable for the metal AM.

### [Solution to Problem]

(1) In order to achieve the above objective, a copper alloy powder according to one aspect of the present invention includes a copper alloy that contains 5% by mass or more and 50% by mass or less of Ni.

It is possible to provide a copper alloy powder having excellent oxidation resistance in a case where an appropriate amount of Ni is contained. The copper alloy powder does not easily undergo oxidation and thus does not cause a change in laser absorbability due to an oxidation reaction during irradiation with a laser in a case of forming an additive manufactured part. Therefore, in association with the irradiation with a laser, heat generation can be achieved in a stable state; and thereby, it is possible to manufacture an additive manufactured part in a state where the fusion behavior is stable. That is, the copper alloy powder containing Ni in an amount within the above-described range has a small change rate of a laser absorptance, and this is desirable for a use application such as additive manufacturing.

In addition, in a case where the additive manufactured part is such that a user can touch it by his hands or a user can recognize it visually, designability is significantly deteriorated in a case where a discolored phase that is generated due to an oxidation reaction of Cu is present on the surface, and the hand tactility is also deteriorated depending on the degree of oxidation. Therefore, it is desirable to contain Ni in an amount within the above-described range.
(2) The copper alloy powder according to one aspect of the present invention, preferably contains 45% by mass or more and 95% by mass or less of Cu.

In a case where 45% by mass or more of Cu is contained, it is possible to expose a phase containing a sufficient amount of Cu on the surface of an additive manufactured part when the additive manufactured part is formed, and it is possible to provide an additive manufactured part having excellent antimicrobial properties due to the antimicrobial action that is originally possessed by Cu.
(3) The copper alloy powder according to one aspect of the present invention may contain 1% by mass or more and 42% by mass or less of Zn.

Zn has a wide solid solubility range with respect to Cu, and thus in a case where a relatively large amount of Zn is contained as a substitute for Cu, it is easy to obtain a copper alloy powder that is capable of achieving the objective of the present aspect. In addition, the oxidation resistance is not significantly affected adversely even in a case where Zn in an amount within the above-described range is added to a copper alloy containing Ni in an amount within the above-described range.

In addition, the laser absorbability also is favorable in a case where Ni together with Zn in amounts within the above-described ranges are contained, and there is no problem of large adverse effects.
(4) The copper alloy powder according to one aspect of the present invention may contain 7% by mass or less of Mn.

Mn is an element that has, together with Ni, a solubility in Cu in a wide range, and thus there is no problem in a case of being added in an amount within the above-described range. It is possible to add Mn in an amount within the above-described range in a case of adding Mn without impairing the oxidation resistance that is obtained by containing Ni in an amount within the above-described range, without impairing the antimicrobial properties that are originally possessed by Cu.
(5) In the copper alloy powder according to one aspect of the present invention, an element abundance ratio Cu/O, which is determined from a peak of each of Cu and O in XPS analysis of a powder surface, is preferably 0.10 or more.

In a case where an element abundance ratio Cu/O, which is determined from peaks of Cu and O in XPS analysis, is 0.10 or more, it is possible to provide a copper alloy powder having a low degree of surface oxidation, and it is possible to provide an additive manufactured part having a low degree of oxidation in a case of being used for a use application to additive manufacturing.
(6) In the copper alloy powder according to one aspect of the present invention, a ratio (Cu + Cu₂O)/CuO of a sum of Cu and Cu₂O (Cu + Cu₂O) to CuO is preferably 1 or more in a peak of Cu in XPS analysis of a powder surface.

In a case where (Cu + Cu₂O)/CuO is 1 or more in a peak of Cu in XPS analysis, it is possible to provide a copper alloy powder having a low degree of surface oxidation, and it is possible to provide an additive manufactured part having a low degree of oxidation in a case of being used for a use application to additive manufacturing.
(7) In the copper alloy powder according to one aspect of the present invention, a ratio of CuO is preferably 40% or less in a peak of Cu in XPS analysis of a powder surface.

In a case where a ratio of CuO is 40% or less in a peak of Cu in XPS analysis, it is possible to provide a copper alloy powder having a small rate of surface oxidation, and it is possible to provide an additive manufactured part having a small rate of oxidation in a case of being used for a use application to additive manufacturing.
(8) In the copper alloy powder according to one aspect of the present invention, a thickness of a surface oxidation product film formed on a surface is preferably 3 µm or less.

In a case where a thickness of a surface oxidation product film is 3 µm or less, the thickness of the surface oxidation product film is small, and thus it is possible to provide an additive manufactured part having a small proportion of oxides in a case of being used for a use application to additive manufacturing.

The surface oxidation product film was processed to observe a cross section of the particle using a focused ion beam (FIB) method, and then the cross section was observed with SEM to check the thickness of the film of the oxidation product.
(9) In the copper alloy powder according to one aspect of the present invention, a volume average particle diameter is preferably 10 µm or more and 150 µm or less.

In a case where the volume average particle diameter is in the above-described range, powder aggregation is unlikely to occur in a case of a use application to additive manufacturing, and flowability is unlikely to decrease. In addition, since the powder particle diameter is an appropriate size, uniform powder lamination is possible, and shaping defects do not occur.
(10) In the copper alloy powder according to one aspect of the present invention, a ratio Da/Dt of a loose bulk density of the powder Da to a powder true density Dt is preferably 0.4 or more.

In a case where Da/Dt is set to be 0.4 or more, it is possible to reduce the voids during the powder lamination (powder additive manufacturing), and it is possible to prevent a decrease in the density of the additive manufactured part after fusion with a laser.

(11) The copper alloy powder according to one aspect of the present invention is preferably for additive manufacturing.
(12) The copper alloy powder according to one aspect of the present invention preferably has antimicrobial properties.

### [Advantageous Effects of Invention]

According to the copper alloy powder according to one aspect of the present invention, it is possible to provide a Cu alloy powder having excellent oxidation resistance in a case where an appropriate amount of Ni is contained. The copper alloy powder does not easily undergo oxidation and thus does not cause a change in laser absorbability due to oxidation during irradiation with a laser in a case of forming an additive manufactured part. In addition, the copper alloy powder containing Ni in an amount within the above-described range has a small change rate of a laser absorptance after a heat resistance test; and therefore, the copper alloy powder is desirably used as a use application such as additive manufacturing.

Therefore, in association with the irradiation with a laser, heat generation can be achieved in a stable state; and thereby, it is possible to provide a copper alloy powder that enables the manufacture of an additive manufactured part in a state where the fusion behavior is stable.

### [Brief Description of Drawings]

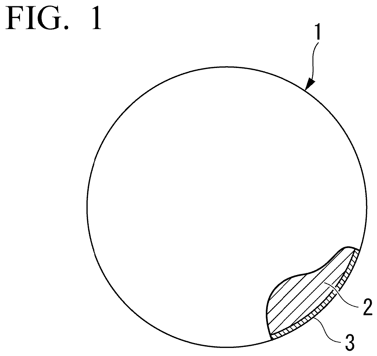

FIG. 1 is a partial cross-sectional view showing an example of a copper alloy powder for additive manufacturing according to a first embodiment.

### [Description of Embodiments]

Hereinafter, the present invention will be described in detail. However, the present invention is not limited to embodiments described below.

FIG. 1 is a side view showing a part of a copper alloy powder (particle) for additive manufacturing according to the first embodiment of the present invention, where the copper alloy powder is in a state of being broken.

A copper alloy powder 1 according to the present embodiment is obtained by forming a surface oxidation product film 3 on an outer peripheral surface of a powder main body 2 consisting of a copper alloy. The copper alloy powder 1 according to the present embodiment has, for example, the powder main body 2 having a spherical shape or a shape similar to the spherical shape, and the surface oxidation product film 3 that thinly covers the entire outer peripheral surface of the powder main body 2. It is noted that although a structure that does not include the surface oxidation product film 3 is desirable, the surface oxidation product film 3 is desirably as thin as possible in a case of being assumed to be formed, and the film thickness of the surface oxidation product film 3 is desirable to be approximately in a range described below.

Regarding the composition of the copper alloy constituting the powder main body 2, the powder main body 2 includes, for example, a copper alloy that contains 5% by mass or more and 50% by mass or less of Ni. For example, the copper alloy may have a composition including Ni in an amount of 5% by mass or more and 50% by mass or less with the balance being Cu and inevitable impurities. It can be said that the balance other than Ni, Zn, Mn, Fe, Al, Si, Sn, and P, which will be described later, is Cu and inevitable impurities.

The reasons for limiting each component will be described below.

### "Ni: 5% by mass or more and 50% by mass or less"

In a case where Ni is contained with Cu to form a copper alloy, Ni is an element that contributes to the improvement of the oxidation resistance of the copper alloy powder 1. The copper alloy powder can be provided in a case where an appropriate amount of Ni in the above-described range is contained. The copper alloy powder does not easily undergo oxidation and thus does not cause a change in laser absorbability due to oxidation during irradiation with a laser in a case of forming an additive manufactured part. Therefore, in association with the irradiation with a laser, heat generation can be achieved in a stable state; and thereby, it is possible to manufacture an additive manufactured part in a state where the fusion behavior is stable.

In addition, it can be seen that a use application such as additive manufacturing is desirable from the fact that the copper alloy powder containing Ni in an amount within the above-described range has a small change rate of a laser absorptance after a heat resistance test.

In a case where the additive manufactured part is such that a user can touch it by his hands or a user can visually recognize it, designability is significantly deteriorated in a case where a produced phase that is produced due to an oxidation reaction of Cu is present on the surface, and the hand tactility is also deteriorated. Therefore, it is desirable to contain Ni in an amount within the above-described range. It is noted that Ni is an expensive element among the elements contained in the copper alloy powder 1, and thus it is desirable that the amount of Ni is low in order to reduce the cost of the powder. In a case where the amount of Ni is suppressed to be low, the copper alloy powder 1 can contain a relatively large amount of Zn described below. The amount of Ni is preferably in a range of 5% by mass or more and 45% by mass or less, and more preferably in a range of 7% by mass or more and 40% by mass or less.

The copper alloy constituting the powder main body 2 can contain 45% by mass or more of Cu.

It is noted that the upper limit of the amount of Cu is 95% by mass. In addition, regarding the composition of the copper alloy constituting the powder main body 2, the powder main body 2 can contain 1 % by mass or more and 42% by mass or less of Zn in addition to Ni and Cu. In addition, regarding the composition of the copper alloy constituting the powder main body 2, the powder main body 2 can contain 7% by mass or less of Mn in addition to Ni and Cu or in addition to Ni, Cu, and Zn.

### "Cu: 45% by mass or more"

Cu is a main component, an amount of 45% by mass or more thereof is desirably contained in order to ensure the antimicrobial properties of the copper alloy powder 1, and an amount of 95% by mass or less thereof is desirably contained in consideration of a lower limit of the amount of Ni required for exhibiting oxidation resistance. In a case where 45% by mass or more of Cu is contained, when an additive manufactured part is formed, it is possible to expose a phase containing a sufficient amount of Cu on the surface of the additive manufactured part, and it is possible to provide an additive manufactured part having excellent antimicrobial properties due to the antimicrobial action that is originally possessed by Cu.

### "Zn: 1 % by mass or more and 42% by mass or less"

Zn has a wide solid solubility range with respect to Cu, and thus even in a case where a relatively large amount of Zn is contained as a substitute for Cu, it is easy to obtain a copper alloy powder that is capable of achieving the objective of the present embodiment. In addition, the oxidation resistance is not significantly affected adversely even in a case where Zn in an amount within the above-described range is added to a copper alloy containing Ni in an amount within the above-described range. In addition, the laser absorbability also is favorable in a case where Ni together with Zn in an amount within the above-described range is contained, and there is no problem of large adverse effects. Therefore, it is desirable that the amount of Ni is reduced and an appropriate amount of Zn is contained in order to reduce the cost of the copper alloy powder 1 as much as possible. The amount of Zn is more preferably in a range of 5% by mass or more and 40% by mass or less.

### "Mn: 7% by mass or less"

Mn is an element that has, together with Ni, a solubility in Cu in a wide range, and thus there is no problem in a case of being added in an amount within the above-described range. It is possible to add Mn in an amount within the above-described range in a case of adding Mn without impairing the oxidation resistance that is obtained by containing Ni in an amount within the above-described range, without impairing the antimicrobial properties that are originally possessed by Cu. As a range of the amount of Mn, it is possible to select a range of 0.5% by mass or more and 7% by mass or less. The amount of Mn is more preferably in a range of 0.7% by mass or more and 5.5% by mass or less.

### "Other elements"

The copper alloy powder 1 according to the present embodiment may contain, as other elements, one or two or more elements selected from Fe, Al, Si, Sn, and P in an amount of approximately 0.1% by mass or more and 10% by mass or less.

In addition, other impurity elements in an amount of approximately 0.1% by mass or less may be contained as impurities. In a case where the alloy according to the present embodiment is manufactured from a molten alloy, Ag, S, and the like may be mixed into the raw material as inevitable impurities. Elements such as Ag and S may be contained as impurities in an amount in the above-described range. Of course, other impurity elements in an amount within the above-described range may be contained.

### "Median diameter of copper alloy powder"

The median diameter (the 50% average particle diameter based on the volume, the volume average particle diameter) of the copper alloy powder 1 is preferably 10 µm or more and 150 µm or less in a case of a use application to additive manufacturing. In a case where the copper alloy powder 1 has a median diameter of less than 10 µm, there is a possibility that the flowability decreases due to the aggregation of the powder, and the copper alloy powder 1 is unsuitable as a raw material powder for additive manufacturing. In a case where the median diameter of the copper alloy powder 1 exceeds 150 µm, the particle diameter of the copper alloy powder 1 is too large. Therefore, uniform powder lamination or supply cannot be carried out; and thereby, shaping defects or the like may be caused. The more preferable median diameter of the copper alloy powder varies depending on the method or device configuration of the additive manufacturing; however, it is 10 µm or more and 60 µm or less in a powder bed fusion (PBF) method, and approximately 50 µm or more and 150 µm or less in a directed energy deposition (DED) method.

### "Ratio of loosened bulk density to powder true density of copper alloy powder"

In a case where the copper alloy powder 1 is used for a use application to additive manufacturing, a ratio Da/Dt of a loose bulk density of a powder Da to a powder true density Dt is preferably 0.4 or more.

In a case where the Da/Dt of the copper alloy powder 1 is less than 0.4, the number of voids during the powder lamination increases, and thus there is a concern that the density of the additive manufactured part after laser fusion decreases. In addition, in a case where Da/Dt is set to be 0.4 or more, it is possible to reduce the voids during the powder lamination, and it is possible to prevent a decrease in the density of the additive manufactured part after fusion with a laser.

The Da/Dt of the copper alloy powder 1 is more preferably 0.5 or more.

### "Surface oxidation product film on surface of copper alloy powder"

It is desirable that the surface oxidation product film 3 is not formed on the surface of the copper alloy powder 1 according to the present embodiment; however, the surface oxidation product film 3 may be formed as long as it is a thin film having a film thickness of 3 µm or less. In addition, it is desirable that the surface oxidation product film 3 is in the following state.

In the XPS analysis of the surface of the copper alloy powder 1 (the XPS analysis of the surface oxidation product film 3), an element abundance ratio Cu/O, which is determined from a peak of each of Cu and O, is preferably 0.10 or more.

In a case where an element abundance ratio Cu/O, which is determined from peaks of Cu and O in XPS analysis, is 0.10 or more, it is possible to provide a copper alloy powder having a small rate of surface oxidation, and it is possible to provide an additive manufactured part having a small rate of oxidation in a case of being used for a use application to additive manufacturing.

In the XPS analysis of the surface of the copper alloy powder 1 (the XPS analysis of the surface oxidation product film 3), a ratio (Cu + Cu₂O)/CuO of a sum of Cu and Cu₂O (Cu + Cu₂O) to CuO in the peak of Cu is preferably 1 or more.

In a case where the ratio (Cu + Cu₂O)/CuO is 1 or more in the peak of Cu in the XPS analysis, it is possible to provide a copper alloy powder having a small rate of surface oxidation, and it is possible to provide an additive manufactured part having a small rate of oxidation in a case of being used for a use application to additive manufacturing.

In the XPS analysis of the surface of the copper alloy powder 1 (the XPS analysis of the surface oxidation product film 3), the ratio of CuO in the peak of Cu is preferably 40% or less.

In a case where a ratio of CuO is 40% or less in a peak of Cu in XPS analysis, it is possible to provide a copper alloy powder having a small rate of surface oxidation, and it is possible to provide an additive manufactured part having a small rate of oxidation in a case of being used for a use application to additive manufacturing.

### "Method for manufacturing copper alloy powder"

For example, a gas atomization method can be employed as a method for manufacturing the copper alloy powder 1 according to the present embodiment. The gas atomization method is known as a method of obtaining a powder having a spherical shape or a shape similar to a spherical shape by a process which includes: melting a copper alloy master alloy to obtain a copper alloy molten metal; and subjecting the copper alloy molten metal to high-pressure gas spraying.

As the copper alloy master alloy used in this process, a copper alloy master alloy having the above-described composition can be used, or a plurality of master alloys can be used to obtain the copper alloy molten metal so that the above-described component elements have the above-described compositional ratio. In addition, the master alloy may contain inevitable impurities in the above-described range.

In addition, it is also possible to obtain a copper alloy molten metal having the above-described compositional ratio by using high-purity copper having a purity of 99.99% by mass or more and less than 99.9999% by mass as high-purity copper that serves as a base of the copper alloy master alloy, adding a required amount of a metallic element or an alloy to this high-purity copper, and then carrying out melting.

The amounts of these trace elements in the copper alloy powder 1 can be measured by high-frequency inductively coupled plasma emission spectrometry or the like.

In the present embodiment, an example in which the gas atomization method is used has been described as a method for manufacturing the copper alloy powder 1. However, a water atomization method, a centrifugal atomization method, an inductively coupled plasma method, a plasma atomization method, or the like may be used as the method for manufacturing copper alloy powder. Alternatively, another generally known method for manufacturing a powder for additive manufacturing may be applied. The copper alloy powder 1 obtained as described above may be appropriately subjected to a heat treatment to achieve the stabilization or the like of the structure.

In order to conduct the adjustment of flowing and separation of aggregation of the copper alloy powder 1 obtained as described above, it is desirable to carry out a classification step such that the median diameter of the copper alloy powder 1 becomes 10 µm or more and 150 µm or less. In the classification step, a sieving method, gravity classification, centrifugal classification, or the like can be used.

The copper alloy powder 1 obtained as described above can be subjected to additive manufacturing by using, for example, M280 (product name, manufactured by Electro Optical Systems (EOS), Germany) manufactured by EOS.

With regard to this additive manufactured part, in a case where the copper alloy powder 1 having an appropriate particle diameter and an appropriate loosened bulk density is used, it is possible to provide an additive manufactured part which is dense and has excellent forming accuracy.

Since the above-described copper alloy powder 1 contains a predetermined amount of Ni and has excellent oxidation resistance, it does not easily undergo oxidation or discoloration even in a case of being stored in an environment of high temperature and high humidity or the like. In addition, the change in laser absorptance is small after heating to a high temperature such as 200°C. Therefore, in a case of applying a laser to form an additive manufactured part, stable heat generation can be achieved from the copper alloy powder 1. As a result, it is possible to achieve stable heat generation and a fused state during the manufacturing of an additive manufactured part, and it is possible to manufacture an additive manufactured part having a desired shape and desired forming accuracy.

In addition, since the above-described copper alloy powder 1 contains 45% by mass or more of Cu, it has excellent antimicrobial properties based on the antimicrobial properties that are originally possessed by Cu. Therefore, it is possible to provide a part such as a doorknob having excellent antimicrobial properties even in a case where the additive manufactured part is a part that is touched by a user, such as a doorknob. In addition, since the additive manufactured part has excellent discoloration resistance, it is possible to provide an additive manufactured part in which discoloration does not easily occur on the surface, in a case where the additive manufactured part is assumed to be an additive manufactured part such as a doorknob which is visually recognized by a user.

### [Examples]

High-purity copper having a purity of 99.999% by mass and a required amount of a master alloy were charged into a melting furnace to produce a copper alloy molten metal, and each copper alloy powder was produced from this copper alloy molten metal by a gas atomization method. Each of the obtained copper alloy powders was subjected to sieving to remove coarse powders and fine powders consisting of zinc fume or the like. Further, sieving was carried out according to a target particle size as necessary to obtain copper alloy powders of Invention Examples 1 to 25 shown in Table 1 and copper alloy powders of Comparative Examples 1 to 3.

Table 1 shows the compositions of the copper alloy powders of Invention Examples 1 to 25 and the copper alloy powders of Comparative Examples 1 to 3.

Table 1 shows the results of determining the average particle diameter and the loosened bulk density for the copper alloy powder of each compositional ratio. The average particle diameter and loosened bulk density of each copper alloy powder were measured by methods described below.

### "Measurement of average particle diameter of copper alloy powder"

The average particle diameter of the copper alloy powder was measured as follows. The particle diameter distribution (particle size distribution) was measured by a wet method using a laser diffraction/scattering particle diameter distribution measuring device (MT3300EXII, manufactured by MICROTRAC). The 50% cumulative particle diameter based on the volume was determined from the obtained results, and the value thereof was defined as the average particle diameter.

### "Ratio of loosened bulk density to powder true density of copper alloy powder"

The loosened bulk density of the copper alloy powder was measured as follows. Using Powder Tester PT-X, manufactured by Hosokawa Micron Corporation, a loosened bulk density of a powder was measured in accordance with the standards of the Association of Powder Process Industry and Engineering, JAPAN, SAP05-98: 2013, where the powder was allowed to pass through a 50-mesh sieve, allowed to be naturally dropped, and then filled into a container. The simple average value of the results from three times of the measurements was calculated, and the value thereof was defined as the loose bulk density of a powder.

The true density of the copper alloy powder was measured as follows. The true density was measured according to a gas substitution method using Ultra-Pycnometer Q1000, manufactured by QUANTACHROME INSTRUMENTS.

The ratio of the loose bulk density of a powder (Da) and the powder true density (Dt) was calculated from the obtained values of the loose bulk density of a powder (Da) and the powder true density (Dt).

### "Production of additive manufactured part"

Next, using each of the copper alloy powder specimens (Invention Examples 1 to 25 and Comparative Examples 1 to 3), an additive manufactured part having a size of 50 × 50 mm and a thickness of 1 mm, and a cubic additive manufactured part having a size of 10 mm × 10 mm (one side: 10 mm) were produced using M280 (3D printer) manufactured by EOS.

The antimicrobial action (antimicrobial properties) and the discoloration resistance of the obtained additive manufactured part were evaluated by the methods described below.

### "Surface analysis by XPS"

Among the specimens to be tested, those of Invention Example 1 and Invention Example 4 were subjected to analysis with respect to a region of a surface ϕ200 µm by XPS (X-ray photoelectron spectroscopy). Table 2 shows the measurement results from XPS.

It is noted that in the XPS measurement results, a minimum value and a maximum value are described in a case where specimens having the same composition were subjected to a plurality of times of measurement.

An integrated intensity value was acquired for each of the peaks of Cu and O on the surface, concentration conversion was carried out according to a relative sensitivity coefficient method, and the abundance ratio of Cu to O was determined to calculate the ratio of Cu/O.

The ratio between Cu, Cu₂O, and CuO on the surface was determined by carrying out chemical state separation using the peak of Cu. Specifically, first, the Cu2p3/2 peak was separated into two peaks, at 933.7 eV derived from CuO and at 932.5 to 932.7 eV derived from Cu or Cu₂O. Then, the ratio of the integrated intensity value at each peak was defined as the abundance ratio. It is noted that Cu and Cu₂O each have a peak in an energy band of 932.5 to 932.7 eV and peak separation is difficult in principle, and thus a calculation was carried out to obtain a combined abundance (total amount) of Cu and Cu₂O.

In addition, for the ratio of CuO in the peak of Cu, a value of CuO/(Cu + Cu₂O + CuO) was used.

### "Evaluation method for antimicrobial properties"

The antimicrobial properties were evaluated according to the following simple antimicrobial test method. The test was carried out by seeding bacteria on a specimen (additive manufactured part) by a film method according to JIS Z 2801. The additive manufactured part was produced as follows. Using the copper alloy powder specimen, an additive manufactured part having a size of 50 × 50 mm and a thickness of 1 mm was produced using M280 (3D printer) manufactured by EOS. The test was carried out under the condition that the test time was 10, 20, 30, 40, 50, 60, 70, 80, 90, and 100 minutes, and after a lapse of a predetermined period of time in each case, the bacteria were recovered, and the number of viable bacteria was measured. Escherichia coli (ATCC 8739 strain) specified in JIS was used as the bacterial species.

Based on the results, the time (T_{1/10}) at which the number of viable bacteria reached 1/10 was measured. It is noted that the number of viable bacteria was measured at each of the five measurement points, and the average value thereof was calculated to determine T_{1/10}.

In a case where T_{1/10} was 10 minutes or less, the antimicrobial properties were evaluated as being excellent, which is described as "@" (excellent) in the table. In a case where T_{1/10} was more than 10 minutes and 20 minutes or less, the antimicrobial properties were evaluated as being good, which is described as "o" (good) in the table. In a case where T_{1/10} was more than 20 minutes and 100 minutes or less, the antimicrobial properties were evaluated as being acceptable, which is described as "Δ" (fair) in the table. In a case where the number of viable bacteria did not reach 1/10 even after 100 minutes or more, the antimicrobial properties were evaluated as poor, which is described as "×" (poor) in the table. It is noted that particles having the same composition as the additive manufactured part are considered to have the same antimicrobial properties.

### "Method of testing discoloration resistance according to moisture resistance test"

The discoloration resistance of the copper alloy powder was evaluated according to the following discoloration resistance test. Using the copper alloy powder specimen, a cubic additive manufactured part having a size of 10 mm × 10 mm (one side: 10 mm) was produced using M280 (3D printer) manufactured by EOS. The surface of the additive manufactured part was polished with emery paper #1000. Next, the additive manufactured part was disposed in a constant temperature and constant humidity bath so that the polished surface was upward, and each sample (additive manufactured part) was exposed to an atmosphere with a temperature of 60°C and a relative humidity of 95%.

The test time was set to 24 hours, and after the test, the specimen was taken out to check a change in the appearance of the upper surface which is the polished surface.

The discoloration resistance was evaluated as follows. In a case where no change in appearance was confirmed on the entire surface, the discoloration resistance was evaluated as being excellent, which is described as "@" (excellent) in T table 1. In a case where the discoloration of the appearance occurred only in half or less of the entire surface, the discoloration resistance was evaluated as being good, which is described as "∘" (good) in Table 1. In a case where the discoloration of the appearance was observed over half or more of the entire surface, the discoloration resistance was evaluated as being poor, which is described as "×" (poor) in Table 1.

The discoloration of the appearance referred to here was determined as follows. Using a spectrocolorimeter "CM-700d" manufactured by Konica Minolta, Inc., the color difference (the color difference before and after the test) indicated by the color difference ΔE was measured by a SCI (Specular Component Included) method according to JIS 8781-4. In a case where the color difference before and after the test was 5 or more, the appearance was determined as discolored. The color difference indicates a change in color before and after the test, and in a case where the color difference is 5 or more, it can be visually confirmed that the discoloration has sufficiently occurred.

### "Change rate of laser absorptance"

For each specimen, a change rate of the laser absorptance before and after the durability test with respect to a laser having a wavelength of 1064 nm before and after the durability test was determined. The durability test was a test in which the specimen was heated to 200°C in the atmosphere of atmospheric air, and subsequently the specimen was held for 60 minutes.

The change rate of the laser absorptance before and after the durability test is preferably ±50% or less (-50% to 50%), and more preferably ±20% or less (-20% to 20%).

The measurement results are collectively shown in the following Table 1.

**[Table 1]**

| | | Copper layer | | | | | | | | | Discoloration resistance | Change rate of laser absorptance (1064 nm) (%) | Antimicrobial properties | Da/Dt |
|---|---|---|---|---|---|---|---|---|---|---|---|---|---|---|
| | | Composition (mass%) | | | | | | | | | | | | |
| | | Cu | Zn | Ni | Mn | Fe | Al | Si | Sn | P | | | | |
| | 1 | 54 | 35 | 11 | - | - | - | - | - | - | @ | -10 | ○ | 0.51 |
| | 2 | 52 | 39 | 9 | - | - | - | - | - | - | @ | 0 | ○ | 0.57 |
| | 3 | 56 | 31 | 12 | 0.9 | 0.1 | - | - | - | - | @ | 10 | ○ | 0.54 |
| | 4 | 90 | - | 10 | - | - | - | - | - | - | @ | 0 | @ | 0.46 |
| | 5 | 90 | - | 9 | - | 1 | - | - | - | - | ○ | 20 | @ | 0.52 |
| | 6 | 85.2 | 1 | 11 | 1 | 1.8 | - | - | - | - | @ | 0 | @ | 0.49 |
| | 7 | 70 | - | 30 | - | - | - | - | - | - | @ | 10 | ○ | 0.60 |
| Invention Example | 8 | 71 | - | 29 | - | - | - | - | - | - | @ | 0 | ○ | 0.45 |
| | 9 | 64 | 1 | 33 | 1 | 1 | - | - | - | - | @ | -10 | ○ | 0.55 |
| | 10 | 95 | - | 5 | - | - | - | - | - | - | ○ | 30 | @ | 0.55 |
| | 11 | 88 | 5 | 7 | - | - | - | - | - | - | ○ | 40 | @ | 0.49 |
| | 12 | 49 | 36 | 9 | 6 | - | - | - | - | - | @ | 10 | ○ | 0.53 |
| | 13 | 47.5 | 40 | 8 | 4.5 | - | - | - | - | - | @ | -10 | ○ | 0.60 |
| | 14 | 50 | 34 | 9.5 | 6.5 | - | - | - | - | - | @ | 0 | ○ | 0.49 |
| | 15 | 56 | 26 | 18 | - | - | - | - | - | - | @ | 0 | ○ | 0.48 |
| | 16 | 54 | 29.5 | 16.5 | - | - | - | - | - | - | @ | 10 | ○ | 0.52 |
| | 17 | 58 | 22 | 19.5 | 0.5 | - | - | - | - | - | @ | 10 | ○ | 0.51 |
| | 18 | 64 | 18 | 18 | - | - | - | - | - | - | @ | 10 | ○ | 0.46 |
| | 19 | 62 | 21.5 | 16.5 | - | - | - | - | - | - | @ | 0 | ○ | 0.45 |
| Invention Example | 20 | 66 | 14 | 19.5 | 0.5 | - | - | - | - | - | @ | 0 | ○ | 0.48 |
| | 21 | 57.4 | - | 41 | - | - | 1 | 0.5 | - | 0.1 | @ | 0 | ○ | 0.51 |
| | 22 | 48.5 | - | 43 | - | - | 8 | - | 0.5 | - | @ | 0 | ○ | 0.49 |
| | 23 | 52 | - | 48 | - | - | - | - | - | - | @ | 0 | ○ | 0.48 |
| | 24 | 53.9 | 10 | 35 | - | - | - | - | 1 | 0.1 | @ | 0 | ○ | 0.55 |
| | 25 | 62.7 | 5 | 28 | 2 | - | 0.1 | 2 | 0.1 | 0.1 | @ | 0 | ○ | 0.52 |
| Comparative Example | 1 | 100 | - | - | - | - | - | - | - | - | × | 130 | @ | 0.46 |
| | 2 | 30 | - | 70 | - | - | - | - | - | - | @ | 10 | Δ | 0.46 |
| | 3 | 97 | - | 3 | - | - | - | - | - | - | × | 60 | @ | 0.51 |

**[Table 2]**

| | | Copper layer | | | | | | | | | XPS measurement | | | Antimicrobial properties |
|---|---|---|---|---|---|---|---|---|---|---|---|---|---|---|
| | | Composition (mass%) | | | | | | | | | | | | |
| | | Cu | Zn | Ni | Mn | Fe | Al | Si | Sn | P | Cu/O | (Cu+Cu₂O)/CuO | CuO | |
| Invention Examples | 1 | 54 | 35 | 11 | - | - | - | - | - | - | 0.14 to 0.23 | 3.27 to 8.25 | 11% to 23% | ○ |
| | 4 | 90 | - | 10 | - | - | - | - | - | - | 0.29 to 0.37 | 1.50 to 4.00 | 20% to 40% | ○ |

As shown in the results in Table 1, in Invention Examples 1 to 25, the discoloration resistance due to the constant temperature and constant humidity bath was excellent, and the change rate of the laser absorptance was also small. Of course, the antimicrobial properties were also excellent in Invention Examples 1 to 25.

In Invention Examples 1 to 25, the ratio Da/Dt of a loose bulk density of a powder Da to a powder true density Dt was 0.4 or more.

From these results, it is revealed that the copper alloy powder according to the present embodiment is excellent in discoloration resistance and antimicrobial properties, and the change in the laser absorptance after heating at a high temperature of 200°C is small.

In contrast, although Comparative Example 1 of the pure copper powder had excellent antimicrobial properties, it had a problem in discoloration resistance due to the constant temperature and constant humidity bath, and there was a problem in that the change rate of the laser absorptance was also large.

In Comparative Example 2, the amount of Ni was 70% by mass, the amount of Cu was 30% by mass, and the proportion of Ni was large. Therefore, the discoloration resistance was excellent, and the change rate of the laser absorptance was also excellent. However, since the antimicrobial properties were slightly inferior and the amount of Ni was also as large as 70% by mass, the cost was high, which was unsuitable for mass production.

In Comparative Example 3, the amount of Ni was 3% by mass, the amount of Cu was 97% by mass, and the proportion of Ni was small. Therefore, the discoloration resistance was inferior, and the change rate of the laser absorptance was also inferior.

In addition, as shown in Table 2, in Invention Examples 1 and 4, the element abundance ratio Cu/O, which was determined from the peak of each of Cu and O in the XPS analysis, was 0.10 or more, and specifically, 0.14 to 0.37.

As shown in Table 2, in Invention Examples 1 and 4, the ratio (Cu + Cu₂O)/CuO of the sum of Cu and Cu₂O (Cu + Cu₂O) to CuO was 1 or more, and specifically, 1.50 to 8.25 in the peak of Cu in the XPS analysis.

As shown in Table 2, in Invention Examples 1 and 4, the ratio of CuO was 40% or less, and specifically, 11 % to 40% in the peak of Cu in the XPS analysis.

### [Industrial Applicability]

The copper alloy powder according to the present embodiment is suitably applied as a raw material powder for producing an additive manufactured part by the metal AM.

### [Reference Signs List]

1: Copper alloy powder
2: Powder main body
3: Surface oxidation product film

## Claims

1. A copper alloy powder comprising a copper alloy that contains 5% by mass or more and 50% by mass or less of Ni.

2. The copper alloy powder according to Claim 1, wherein an amount of Cu in the copper alloy powder is 45% by mass or more and 95% by mass or less.

3. The copper alloy powder according to Claim 1 or 2, wherein the copper alloy powder contains 1% by mass or more and 42% by mass or less of Zn.

4. The copper alloy powder according to any one of Claims 1 to 3, wherein the copper alloy powder contains 7% by mass or less of Mn.

5. The copper alloy powder according to any one of Claims 1 to 4, wherein an element abundance ratio Cu/O, which is determined from a peak of each of Cu and O in XPS analysis of a powder surface, is 0.10 or more.

6. The copper alloy powder according to any one of Claims 1 to 5, wherein a ratio (Cu + Cu₂O)/CuO of a sum of Cu and Cu₂O (Cu + Cu₂O) to CuO is 1 or more in a peak of Cu in XPS analysis of a powder surface.

7. The copper alloy powder according to any one of Claims 1 to 6, wherein a ratio of CuO is 40% or less in a peak of Cu in XPS analysis of a powder surface.

8. The copper alloy powder according to any one of Claims 1 to 7, wherein a thickness of a surface oxidation product film formed on a surface is 3 µm or less.

9. The copper alloy powder according to any one of Claims 1 to 8, wherein a volume average particle diameter is 10 µm or more and 150 µm or less.

10. The copper alloy powder according to any one of Claims 1 to 9, wherein a ratio Da/Dt of a loose bulk density of the powder Da to a powder true density Dt is 0.4 or more.

11. The copper alloy powder according to any one of Claims 1 to 10, wherein the copper alloy powder is for additive manufacturing.

12. The copper alloy powder according to any one of Claims 1 to 11, wherein the copper alloy powder has antimicrobial properties.
